# EUROPEAN PATENT APPLICATION

(11) **EP 1 808 066 A1**
(43) Date of publication of application: **18.07.2007**
(21) Application number: 06075286.2
(22) Date of filing: 10.02.2006
(51) Int. Cl.: A01G 9/18

(54) **System for growth and/or crop boosting conditioning of plants**

(30) Priority: 12.01.2006 NL 1030905
(71) Applicant: Nederlandse Organisatie voor Toegepast-Natuurwetenschappelijk Onderzoek TNO, 2628 VK Delft (NL)
(72) Inventor: Krosse, Luciënne Jozefina Wilhelmina Maria, 6951 HX Dieren (NL); Bootsveld, Nicolaas Richardus, 7328 LB Apeldoorn (NL)
(74) Representative: Winckels, Johannes Hubertus F.

(57) **Abstract**

System for growth and/or crop boosting conditioning of plants (2), comprising means (3, 4) for supplying water and CO₂ to those plants. The means are, at least partly, arranged for feeding and/or applying CO₂ and water in combined form, e.g. in the form of CO₂-rich water. The means may comprise local spray or mist heads (4) which are arranged for applying CO2 and water in combined form or CO2-rich water (5) respectively, in the direct environment of the relevant plants. Combining CO₂ and water into CO₂-rich water may be performed by dissolving CO₂ into water under pressure.

## Description

### Field

The invention concerns a system for growth and/or crop boosting conditioning of plants, especially, but not exclusively, in greenhouse farming etc.

### Background

In the greenhouse farming four parameters are important for the right cultivation conditions: temperature, atmospheric humidity, light intensity and CO₂ concentration. Often, in conventional systems
i) the necessary heat is transported by means of warm water pipes throughout the greenhouse,
ii) the cold is generated centrally and distributed throughout the greenhouse by means of large ventilators,
iii) the CO₂ is generated centrally and distributed throughout the greenhouse by means of CO₂ hoses and
iv) the moisture is also generated centrally and distributed by means of ventilation.

This method has as a result that for one thing a lot of energy is needed in order to keep the whole greenhouse in the required condition, for another thing it is not possible to come over a maximum CO₂ concentration in the greenhouse of about 500 ppm. This while just significantly higher CO₂ concentrations are desired, to about 3000 ppm, to maximize the crop production.

### Summary

In an earlier application (not yet published at the time of the filing of the present application) applicant proposed, as an improved and cost effective technique for simultaneous cooling and moistening, to spray water locally, by which measure both cooling (namely by evaporation of the sprayed water) and moistening is realized at the location of the plant.

The present invention is based on the understanding that one system, which is appropriate to be used for - either local or non-local- distribution (e.g. by spraying or misting) of water, at the same time can be used for the distribution of CO₂ namely by means of combined distribution resp. release of CO₂ and water (required by the plants), e.g. in the form of application of CO₂-containing or CO₂-rich water (cf. carbonated water in soft drinks) to the relevant plants. It is noted that of course what is meant here with "CO₂-containing or CO₂-rich water" is water with a higher concentration (measure) CO₂ than present in water by nature and intended for "CO₂-manuring" of the plants, in order to boost their growth and/or crop.

Although the invention is applicable for (conventional) central distribution, however, preferably the CO₂-rich water will be distributed locally - e.g. by local spray or mist heads - by which the moisture and CO₂-distribution is better controllable and also higher local CO₂ concentrations can be realized than using conventional, central moisture distribution. Moreover, the cooling and moistening (humidifying) effect becomes more efficient because smaller water drops are distributed. The invention can be applied in greenhouses, however, also at the cultivation of plants, vegetables, crops etc. in the open air.

Summarized, the invention thus comprises a system for growth and/or crop boosting conditioning of plants, comprising means for supplying water and CO₂ to those plants, which means, at least partly, are arranged for feeding and/or applying the CO₂ and water in combined form to those plants. Said means may - as said- be arranged for feeding and/or applying CO₂-containing or (rather) CO₂-rich water to those plants.

Although the invention is not limited to systems with local release of water etc., application of the invention does have advantages there. So said means preferably comprise local spray or mist heads which are arranged for applying CO₂ and water in combined form or CO₂-rich water respectively, in the direct environment of the relevant plants.

Preferably, combining CO₂ and water to CO₂ -containing or CO₂-rich water can be part of the conditioning system as presented in the foregoing. Said means preferably may be arranged for dissolving CO₂ into water under pressure. The CO₂-rich water may thus e.g. be made centrally by dissolving CO₂ into water under pressure (in the order of magnitude of the pressure of the water pipe system) in a processor which is arranged for that purpose.

### Exemplary embodiment

Figure 1 shows the CO₂ solubility in water at overpressure.
Figure 2 shows an exemplary embodiment of the invention where local CO₂-rich water is supplied to plants by means of local spray heads.

First, next note is made about the solubility of CO₂ in water.
In general the solubility of gasses in liquids can simply be described by the Law of Henry. The solubility of CO₂ in water is an exception to this rule. CO₂ does not dissolve only in water, but a part of the gas forms a equilibrium reaction with the water molecules by which carbon dioxide is formed:

*CO*_{2(g)} *+ H*₂*O₍₁₎* ↔ *H*₂*CO*_{3(*aq*)}

The exact position of the equilibrium - at 20°C and 1 bar in equilibrium ca. 1% carbon dioxide (H₂CO₃) is formed; the remaining 99% of the CO₂ dissolves into the water - is dependant on the pressure and temperature and can thus move by changing the circumstances. In the manufacturing of soft drinks grateful use is made of this. This principle has been become known under the name "Le Chatelier's Principle".

The "Le Chatelier's Principle" stands for the causing of a disruption at an equilibrium system by which the equilibrium moves to undo the disruption. In the soft drink industry soft drinks are bottled under an over pressure by which the equilibrium reaction moves to the right: more carbonic acid is formed. As long as the bottle remains closed, this new equilibrium is maintained. At the moment the bottle is opened and the pressure above the soft drink thus decreases, the equilibrium moves again to the left (the original equilibrium) and CO₂ is given off (the 'fizz' in the soft drink).

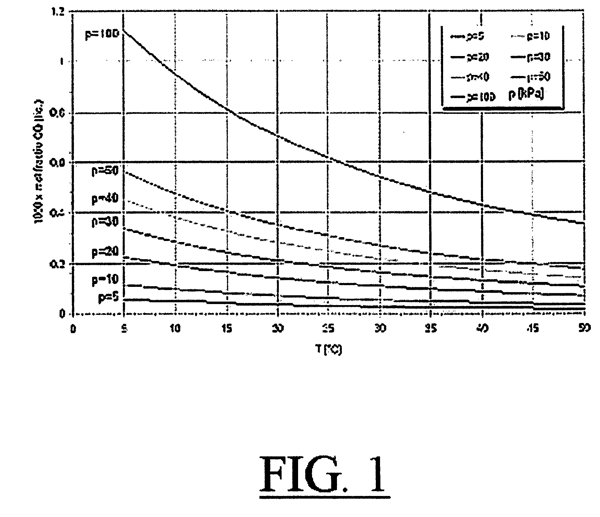

In figure 1 the solubility of CO₂ has been shown as a function of the pressure.

Besides the situation that both cooling, moistening and also CO₂ manuring is desired, there may be moments in the cultivation cycle or seasons that no cooling, but still CO₂ manuring is needed. At such moments, when there is no need for cooling, CO₂ still can be injected with the same system. The pipes and the (high pressure) spray heads, being flown through by CO₂-rich water in the cooling situation, are flown through now by gaseous CO₂. Any water left behind is pressed out of the pipe network by the CO₂. The pipes and spray heads are already calculated for high pressure systems.

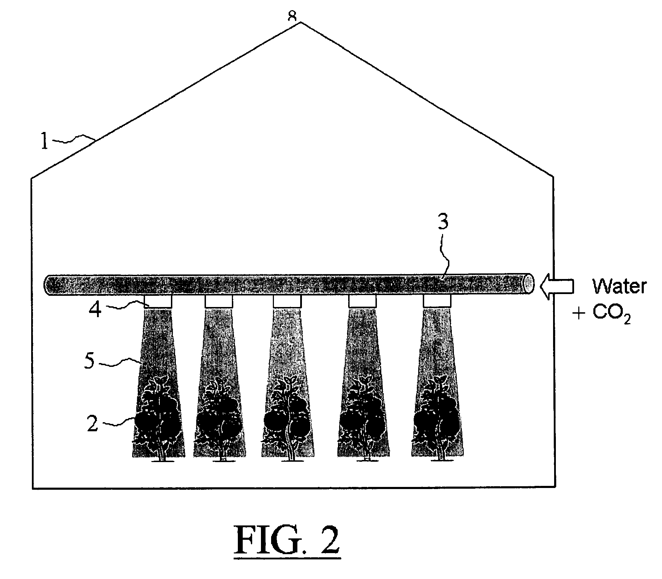

Figure 2 shows an exemplary embodiment of the invention in which local CO₂-rich water is supplied to plants by means of local spray heads. The figure shows a greenhouse (not necessary for implementing the invention), in which an (only partially showed) system is situated for growth and/or crop boosting conditioning of plants (the system is more extensively described in said earlier patent application filed by applicant). The system comprises means (incl.) 3 and 4 to supply water to those plants 2. Where, up to now, for growth and/or crop boosting intended CO₂-gas was generated centrally and (solely) distributed by means of CO₂-hoses throughout the greenhouse, in the exemplary concept shown in figure 2 the relevant means 3 and 4 are arranged for supplying and/or applying CO₂ and water to those plants simultaneous, viz. together, in combined form.

In the figure via a "spray pipe" 3 CO₂-rich water is applied to the plants 2 via local spray or mist heads 4 which are arranged and installed so that they spray or mist CO₂-rich water in the direct environment of the relevant plants 2, thus causing that both water vapour and CO₂ are applied locally (and therefore effectively and efficiently) to the plants 2.

In the figure it has not been shown explicitly (however well imaginable and well-known as such) a processor in which combining - e.g. by dissolving CO₂ in water under pressure - of CO₂ and water to CO₂ -rich water takes place and which feeds the pipe system 3 with the needed CO₂ containing or CO₂ - rich water.

## Claims

1. System for growth and/or crop boosting conditioning of plants (2), comprising means (3, 4) for supplying water and CO₂ to those plants, which means, at least partly, are arranged for feeding and/or applying the CO₂ and water in combined form.

2. System according to claim 1, said means being arranged for feeding and/or applying CO₂-rich water to those plants.

3. System according to claim 1 or 2, said means comprising local spray or mist heads (4) which are arranged for applying CO₂ and water in combined form or CO₂-rich water (5) respectively, in the direct environment of the relevant plants.

4. System according to claim 2, said means being arranged for combining CO₂ and water to CO₂-rich water.

5. System according to claim 4, said means being arranged for dissolving CO₂ into water under pressure.
